(19) Europäisches Patentamt / European Patent Office / Office européen des brevets

(11) EP 2 459 982 B1

(12) FASCICULE DE BREVET EUROPEEN

(45) Date de publication et mention de la délivrance du brevet:
07.05.2014 Bulletin 2014/19

(51) Int Cl.:
*B60C 99/00* (2006.01)      *G01H 17/00* (2006.01)
*G01M 17/02* (2006.01)

(21) Numéro de dépôt: 10752044.7

(22) Date de dépôt: 19.07.2010

(86) Numéro de dépôt international:
PCT/FR2010/051515

(87) Numéro de publication internationale:
WO 2011/012793 (03.02.2011 Gazette 2011/05)

(54) **PROCÈDE DE PRÉVISION D'UN BRUIT DE ROULEMENT D'UN PNEUMATIQUE**

VERFAHREN ZUR VORHERSAGE VON REIFENLAUFGERÄUSCHEN

METHOD FOR PREDICTING TIRE RUNNING NOISE

(84) Etats contractants désignés:
AL AT BE BG CH CY CZ DE DK EE ES FI FR GB GR HR HU IE IS IT LI LT LU LV MC MK MT NL NO PL PT RO SE SI SK SM TR

(30) Priorité: 28.07.2009 FR 0955276

(43) Date de publication de la demande:
06.06.2012 Bulletin 2012/23

(73) Titulaires:
• COMPAGNIE GENERALE DES ETABLISSEMENTS MICHELIN
63000 Clermont-Ferrand (FR)
• MICHELIN Recherche et Technique S.A.
1763 Granges-Paccot (CH)

(72) Inventeur: ROCHOUX, Daniel
F-36400 La Châtre (FR)

(74) Mandataire: Dequire, Philippe Jean-Marie Denis
M.F.P. Michelin
23, place des Carmes-Déchaux
DGD/PI - F35 - Ladoux
63040 Clermont-Ferrand Cedex 09 (FR)

(56) Documents cités:
JP-A- 2007 210 472     JP-A- 2007 230 458

• CESBRON J ET AL: "Experimental study of tyre/road contact forces in rolling conditions for noise prediction" JOURNAL OF SOUND & VIBRATION, LONDON, GB, vol. 320, no. 1-2, 6 février 2009 (2009-02-06), pages 125-144, XP025796429 ISSN: 0022-460X [extrait le 2008-09-16]
• BRINKMEIER ET AL: "A finite element approach for the simulation of tire rolling noise" JOURNAL OF SOUND & VIBRATION, LONDON, GB, vol. 309, no. 1-2, 23 octobre 2007 (2007-10-23), pages 20-39, XP022317159 ISSN: 0022-460X
• CESBRON J ET AL: "Numerical and experimental study of multi-contact on an elastic half-space" INTERNATIONAL JOURNAL OF MECHANICAL SCIENCES, PERGAMON PRESS, OXFORD, GB, vol. 51, no. 1, 1 janvier 2009 (2009-01-01), pages 33-40, XP025898654 ISSN: 0020-7403 [extrait le 2008-11-27]

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 459 982 B1

**Description**

La présente invention concerne le domaine technique des pneumatiques et plus particulièrement celui du bruit de roulement d'un pneumatique sur un revêtement de chaussée.

On connait, de par la demande de brevet JP2007230458A un procédé de prévision d'un bruit de roulement d'un pneumatique sur un revêtement de chaussée en liaison avec les sculptures du pneumatique.

On connaît également de l'état de la technique un autre procédé de prévision d'un bruit de roulement d'un pneumatique sur un revêtement de chaussée. Dans ce procédé, on acquiert un profil réel en trois dimensions du revêtement. Le profil réel comprend des indenteurs formés par des cailloux ou des gravillons incorporés dans une matrice, par exemple du goudron.

Afin de simplifier l'utilisation du profil réel acquis, on détermine des descripteurs réels des indenteurs réels comprenant, par exemple, une hauteur moyenne des indenteurs, une densité moyenne des indenteurs, etc...

Puis, on utilise une loi de prévision du bruit de roulement du pneumatique. La loi est fonction de nombreux descripteurs retenus comme pertinents à l'égard du bruit de roulement. Cette loi est déterminée par corrélation entre des lois empiriques de prévision du bruit et des descripteurs déterminés. La loi est donc de nature essentiellement corrélative.

Or, le nombre important de descripteurs dont la loi est fonction ne permet pas un calcul rapide du bruit prévu. En outre, certains descripteurs sont obtenus à partir de tables de calcul complexes ou de systèmes d'équations numériques relativement longs à résoudre.

Enfin, les descripteurs retenus ne sont pas toujours pertinents pour décrire la réalité physique de l'effet physique d'interaction entre le revêtement et le pneumatique. On calcule donc ces descripteurs inutilement sans améliorer la précision du bruit prévu. En outre, le lien entre le bruit et les descripteurs du revêtement n'est pas clairement établi.

Tous ces inconvénients conduisent à utiliser un procédé long en termes de temps de mesure et de calcul et médiocre en termes de précision du bruit prévu.

L'invention a pour but d'identifier le type du ou des descripteurs ainsi que le ou les descripteurs pertinents et nécessaires à une prévision précise et simple du bruit de roulement du pneumatique.

A cet effet, l'invention a pour objet un procédé de prévision d'un bruit de roulement d'un pneumatique sur un revêtement, dans lequel :

- on relève un profil réel du revêtement,
- on détermine au moins une valeur d'au moins un descripteur du revêtement à partir du profil réel,
- on utilise une loi de prévision du bruit de roulement du pneumatique du type $B = g(V_1,...,V_n)$ dans laquelle $V_1,...,V_n$ sont des valeurs de descripteurs $D_1,...,D_n$ du revêtement, et dans laquelle $1 \leq n \leq 2$ et
- $D_1$ est un nombre d'indenteurs caractéristique du revêtement, et
- $D_2$ est une dimension d'indenteurs caractéristique du revêtement.

Les inventeurs ont trouvé de façon surprenante que seuls les deux descripteurs du revêtement $D_1$ et $D_2$ étaient pertinents pour prévoir précisément le bruit de roulement. Ainsi, un descripteur de type numéraire, $D_1$, et un descripteur de type dimensionnel, $D_2$, permettent de prévoir simplement le bruit de roulement. En outre, ils ont découvert que le nombre d'indenteurs caractéristique du revêtement avait une influence plus importante que la dimension caractéristique si bien que, dans le cas où n=1, seul le nombre d'indenteurs caractéristique permet de prévoir le bruit de roulement.

Une telle loi de prévision est particulièrement avantageuse pour la conception d'un revêtement. En effet, au lieu de mesurer le bruit de roulement expérimentalement, par exemple au moyen de capteurs sonores, sur une chaussée revêtue du revêtement, on peut prévoir le bruit à partir d'un échantillon de la chaussée d'un ou quelques mètres seulement. On économise ainsi les coûts de construction de la chaussée et de l'expérience.

Le bruit de roulement d'un pneumatique donné, roulant dans des conditions données, dépend notamment de la rugosité du revêtement. Cette rugosité engendre des vibrations du pneumatique qui génèrent le bruit. Le revêtement présente également des caractéristiques d'absorption et de réflexion. Le bruit de roulement varie en fonction de ces caractéristiques. Le procédé selon l'invention, compte tenu de son approche physique de l'effet physique d'interaction, permet de séparer la contribution de chacune de ces caractéristiques et, pour le concepteur de route, permet de déterminer la ou les caractéristiques qui font qu'un revêtement est plus ou moins bruyant. Au contraire, une mesure de bruit est globale et ne permet pas de distinguer les mécanismes physiques à l'origine du bruit. La seule mesure ne donne pas le lien clair entre les caractéristiques et le bruit de roulement et ne permet pas de maîtriser la conception du revêtement.

Dans un premier mode de réalisation, la loi de prévision du bruit est du type :

$$B = 20 \log \left[ \left( \frac{R}{Ro} \right)^{\frac{1}{5}} \left( \frac{No}{N} \right)^{\frac{3}{5}} \left( \frac{C}{Co} \right)^{k} \left( \frac{0.75}{1-v^2} \frac{E}{Eo} \right)^{\frac{1}{5}} \right] + Bo$$

dans laquelle R est la valeur de la dimension d'indenteurs caractéristique, N est la valeur du nombre d'indenteurs caractéristique, C est une vitesse de roulement du pneumatique, E est un module de rigidité de la gomme du pneumatique, v est un coefficient de Poisson de la gomme du pneumatique et Ro, No, Co, Eo et Bo sont des valeurs de référence. k appartient à l'intervalle [1,2-2].

On peut ainsi prévoir le bruit de roulement d'un pneumatique quelconque roulant sur un revêtement quelconque.

Dans un deuxième mode de réalisation, la loi de prévision du bruit est du type :

$$B = 20 \log \left[ \left( \frac{R}{Ro} \right)^{\frac{1}{5}} \left( \frac{No}{N} \right)^{\frac{3}{5}} \left( \frac{C}{Co} \right)^{k} \right] + Bo`$$

dans laquelle R est la valeur de la dimension d'indenteurs caractéristique, N est la valeur du nombre d'indenteurs caractéristique, C est une vitesse de roulement du pneumatique et Ro, No, Co, et Bo' sont des valeurs de référence. k appartient à l'intervalle [1,2-2].

On peut, pour un pneumatique donné, utiliser la loi selon le deuxième mode de réalisation pour comparer plusieurs revêtement entre eux. En effet, cette loi ne contient pas de terme relatif au pneumatique.

Dans un troisième mode de réalisation, la loi de prévision du bruit est du type :

$$B = 20 \log \left[ \left( \frac{No}{N} \right)^{\frac{3}{5}} \left( \frac{C}{Co} \right)^{k} \right] + Bo"$$

dans laquelle N est la valeur du nombre d'indenteurs caractéristique, C est une vitesse de roulement du pneumatique et No, Co, et Bo" sont des valeurs de référence. k appartient à l'intervalle [1,2-2].

Dans un quatrième mode de réalisation, la loi de prévision du bruit est du type :

$$B = 20 \log \left[ \left( \frac{No}{N} \right)^{\frac{3}{5}} \left( \frac{C}{Co} \right)^{k} \left( \frac{0.75}{1-v^2} \frac{E}{Eo} \right)^{\frac{1}{5}} \right] + Bo"'$$

dans laquelle N est la valeur du nombre d'indenteurs caractéristique, C est une vitesse de roulement du pneumatique, E est un module de rigidité de la gomme du pneumatique, v est un coefficient de Poisson de la gomme du pneumatique et No, Co, Eo et Bo"' sont des valeurs de référence. k appartient à l'intervalle [1,2-2].

Compte tenu de la puissance du terme relatif à la dimension caractéristique par rapport aux puissances des termes relatifs à la vitesse et au nombre d'indenteurs caractéristique du revêtement, il est possible d'obtenir une bonne approximation du bruit de roulement sans avoir à déterminer la dimension des indenteurs caractéristique du revêtement grâce aux lois des troisième et quatrième mode de réalisation.

Dans un cinquième mode de réalisation, la loi de prévision du bruit est du type :

$$B = 20 \log \left[ \left( \frac{R}{Ro} \right)^{\frac{1}{5}} \left( \frac{No}{N} \right)^{\frac{3}{5}} \right] + Bo""$$

dans laquelle R est la valeur de la dimension d'indenteurs caractéristique, N est la valeur du nombre d'indenteurs caractéristique et Bo"" est une valeur de référence.

Selon une caractéristique optionnelle du procédé :

- on détermine au moins une loi de variation d'au moins un descripteur du revêtement à partir du profil réel, en fonction d'un paramètre variable du profil réel,

- on détermine, pour chaque loi de variation, une valeur, dite d'interaction, de chaque descripteur, à une valeur, dite d'interaction, du paramètre, et
- on prévoit une valeur du bruit de roulement à partir d'une valeur d'interaction d'au moins un descripteur.

En déterminant la loi de variation et en recherchant la valeur d'interaction de chaque descripteur, on peut ainsi décrire correctement l'effet physique d'interaction entre le revêtement et le pneumatique et donc le bruit.

Optionnellement, on découpe le profil réel en plusieurs strates, chaque strate correspondant à une cote du profil réel:

- on détermine une loi de variation de chaque descripteur en fonction de la cote du profil réel, et
- on détermine, pour chaque loi de variation, la valeur d'interaction de chaque descripteur virtuel à la valeur d'interaction de la cote.

Le paramètre variable est la cote z. La valeur d'interaction de la cote correspond à la cote du profil pour laquelle l'écrasement du pneumatique à cette cote représente fidèlement l'écrasement réel du pneumatique sur le revêtement.

Optionnellement :

- le ou les descripteurs comprennent au moins un descripteur, dit réel, d'indenteurs réels du revêtement;
- on détermine la valeur d'interaction de chaque descripteur réel;
- on prévoit la valeur du bruit de roulement à partir de la valeur d'interaction d'au moins un descripteur réel.

Selon d'autres caractéristiques optionnelles du procédé :

- Le descripteur réel étant le nombre d'indenteurs réels par unité de surface du revêtement, la valeur du nombre caractéristique d'indenteurs est la valeur d'interaction du nombre d'indenteurs réels par unité de surface du revêtement.
- La valeur d'interaction est la valeur maximum de la loi de variation du nombre d'indenteurs réels par unité de surface du revêtement.

On calcule le nombre d'indenteurs par unité de surface de revêtement facilement contrairement au procédé de prévision du bruit de l'état de la technique dans lequel on doit calculer nécessairement plusieurs dizaines de descripteurs.

Optionnellement :

- le ou les descripteurs comprennent au moins un descripteur, dit virtuel, d'indenteurs virtuels de modélisation des indenteurs réels ;
- on détermine la valeur d'interaction de chaque descripteur virtuel à partir d'une part, d'une loi d'interaction entre le pneumatique et le revêtement et, d'autre part, de chaque loi de variation des indenteurs virtuels, et
- on prévoit la valeur du bruit de roulement à partir de la valeur d'interaction d'au moins un descripteur virtuel.

Selon une autre caractéristique optionnelle du procédé, les indenteurs virtuels étant représentés par des sphères identiques pour chaque valeur du paramètre variable, le descripteur virtuel est le rayon des sphères et la valeur de la dimension caractéristique est la valeur d'interaction du rayon des sphères.

Pour la valeur d'interaction, chaque indenteur réel est modélisé par un indenteur virtuel qui traduit une réalité physique de l'interaction entre le pneumatique et le revêtement, plutôt qu'une réalité géométrique comme dans l'état de la technique. Ainsi, la quantité de données à manipuler est moindre. En effet, pour chaque valeur du paramètre, les indenteurs virtuels sont tous identiques bien que les indenteurs réels qu'ils modélisent soient tous différents.

L'invention a également pour objet un programme d'ordinateur comprenant des instructions de code aptes à commander l'exécution des étapes du procédé tel que défini ci-dessus lorsqu'il est exécuté sur un ordinateur.

L'invention a aussi pour objet un support d'enregistrement de données comprenant, sous forme enregistrée, un programme tel que défini ci-dessus.

L'invention a également pour objet une mise à disposition d'un programme tel que défini ci-dessus sur un réseau de télécommunication en vue de son téléchargement.

L'invention a enfin pour objet un procédé de fabrication d'un revêtement comprenant une étape de prévision selon un procédé tel que défini ci-dessus.

L'invention sera mieux comprise à la lecture de la description qui va suivre, donnée uniquement à titre d'exemple non limitatif et faite en se référant aux dessins dans lesquels :

- la figure 1 représente un profil réel d'un revêtement de chaussée et un profil réel filtré du revêtement ;
- la figure 2 illustre une étape de découpage du profil réel en strates ;
- la figure 3 représente une loi de variation du nombre d'indenteurs réels du profil réel en fonction d'une cote z;
- la figure 4 illustre une étape de détermination de la déformation réelle du pneumatique par les indenteurs réels;
- la figure 5 illustre une étape de détermination du volume indenté réel par les indenteurs réels dans le pneumatique;
- la figure 6 illustre un profil virtuel obtenu par le procédé selon l'invention ;
- la figure 7 représente une interaction modélisée entre le pneumatique et le revêtement ;
- la figure 8 illustre une partie lenticulaire de sphère à laquelle on se réfère pour la détermination de la déformation virtuelle du pneumatique et du volume indenté virtuel par les indenteurs virtuels dans le pneumatique;
- les figures 9 et 10 représentent des lois de variation de descripteurs virtuels en fonction de la cote z.

Sur les figures, on a représenté des axes X, Y, Z orthogonaux entre eux correspondant aux orientations habituelles longitudinale (X), transversale (Y) et verticale (Z) d'une chaussée.

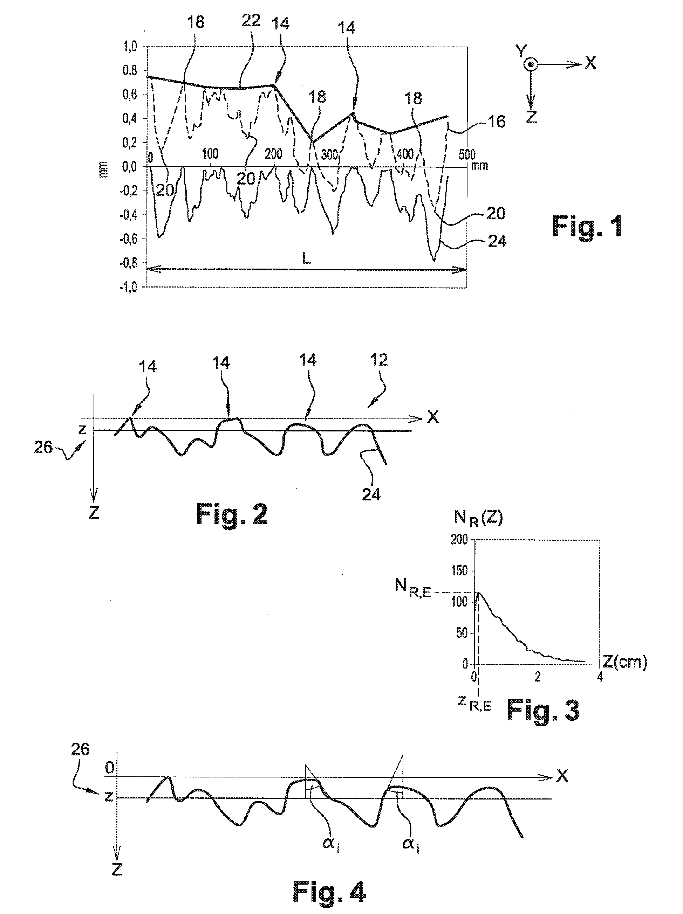

On a représenté sur les figures 1 et 2 un revêtement 12 de chaussée destiné à être en interaction avec un pneumatique. Le revêtement 12 comprend une matrice comprenant du goudron, du bitume et/ou du ciment dans laquelle sont incorporés des gravillons de tailles variées. Ces gravillons, appelés encore granulats, forment des indenteurs 14 à la surface du revêtement 12. Les indenteurs 14 sont destinés à être au contact du pneumatique.

On fabrique le revêtement 12 selon un procédé de prévision décrit ci-dessous.

On relève un profil 16, dit réel, en deux dimensions, d'un échantillon du revêtement 12, de préférence au moyen d'un profilomètre laser. En l'espèce, on mesure une profondeur du profil réel 16 sur une longueur L du revêtement. En acquérant un profil 16 en deux dimensions, on diminue le temps d'acquisition et le matériel à mettre en oeuvre par rapport au relevé d'un profil en trois dimensions. Le profil réel 16 est représenté sur la figure 1 dans un plan X, Z en traits pointillés et présente des crêtes 18 et des puits 20. On considère que chaque profil réel 16 représente une tranche d'épaisseur dy du revêtement.

En variante, on relève plusieurs profils 16 en deux dimensions afin de constituer un échantillon en trois dimensions.

On filtre le profil 16 au moyen d'un filtre 22 de coupure représenté par une ligne brisée sur la figure 1 et appelée ligne de crêtes. La ligne de crêtes 22 sélectionne et relie les crêtes 18 présentant une cote z telle qu'un pneumatique roulant sur le profil 16 rentre en contact uniquement avec les crêtes 22 sélectionnées. Enfin, on redresse le profil 16 en réinitialisant les cotes des crêtes 22 sélectionnées à la cote zéro. On obtient alors un profil 24 redressé représenté par une ligne continue sur la figure 1.

On a représenté sur la figure 2 le profil 24. On discrétise le profil 24 en fonction d'un paramètre variable du profil 24. En l'espèce, le paramètre variable est une cote z du profil 24. On découpe alors le profil 24 en plusieurs strates 26 selon l'axe Z, par exemple cent strates, correspondant chacune à une cote z. Les strates sont sensiblement planes et parallèles au plan X, Y.

On définit des descripteurs, dits réels, $N_R$, $\gamma_R$ et $V_R$ des indenteurs 14. L'indice R indique que ces descripteurs sont mesurés à partir du profil réel 24. On définit également un plan de coupe de cote z correspondant à un plan horizontal perpendiculaire à l'axe Z et s'étendant à la cote z. Pour chaque descripteur réel $N_R$, $\gamma_R$ et $V_R$, on va maintenant calculer une loi de variation en fonction du paramètre variable z.

En référence aux figures 2 et 3, $N_R$ représente le nombre d'indenteurs réels 14 par unité de surface. Pour chaque cote z, on calcule le nombre d'indenteurs 14 du profil 24 interceptés par chaque plan de coupe de cote z et par unité de surface. On détermine alors une loi de variation $N_R(z)$ en fonction du paramètre variable z. Puis, on détermine une valeur, dite d'interaction, $N_{R,E}$ à partir de la loi de variation $N_R(Z)$. La valeur d'interaction $N_{R,E}$ est la valeur maximale du nombre d'indenteurs réels 14 par unité de surface du revêtement 12. Sur la figure 3, $N_{R,E}$ = 115 indenteurs par m$^2$ pour $z_{R,E}$=17 mm.

Dans le cas d'un profil en trois dimensions, on détermine, pour chaque cote z, le nombre d'indenteurs réels 14 en contact avec le pneumatique. Pour une même tranche dy de revêtement, le nombre d'indenteurs réels 14 en contact avec le pneumatique varie si les crêtes 18 ne sont pas coplanaires dans la tranche dy considérée.

Dans le cas d'un profil en deux dimensions, on fait l'hypothèse selon laquelle la valeur maximale du nombre d'indenteurs réels 14 est la valeur réelle du nombre d'indenteurs réels 14 pour chaque cote z. En effet, un maximum local est généralement révélateur de la présence d'une crête 18 selon la direction transversale dans la tranche dy explorée.

En référence à la figure 4, $\gamma_R$ représente une déformation locale réelle du pneumatique par chaque indenteur 14. Pour chaque cote z, on calcule chaque déformation $\gamma_{z,i}$ définie par $\gamma_{z,i}$=cotan($\alpha_i$) où $\alpha_i$ est le demi-angle au sommet de chaque indenteur 14i présent à la cote z. Puis, pour chaque cote z, on calcule une valeur moyenne des déformations $\gamma_{z,i}$. On détermine ainsi une loi de variation $\gamma_R(Z)$ en fonction du paramètre variable z.

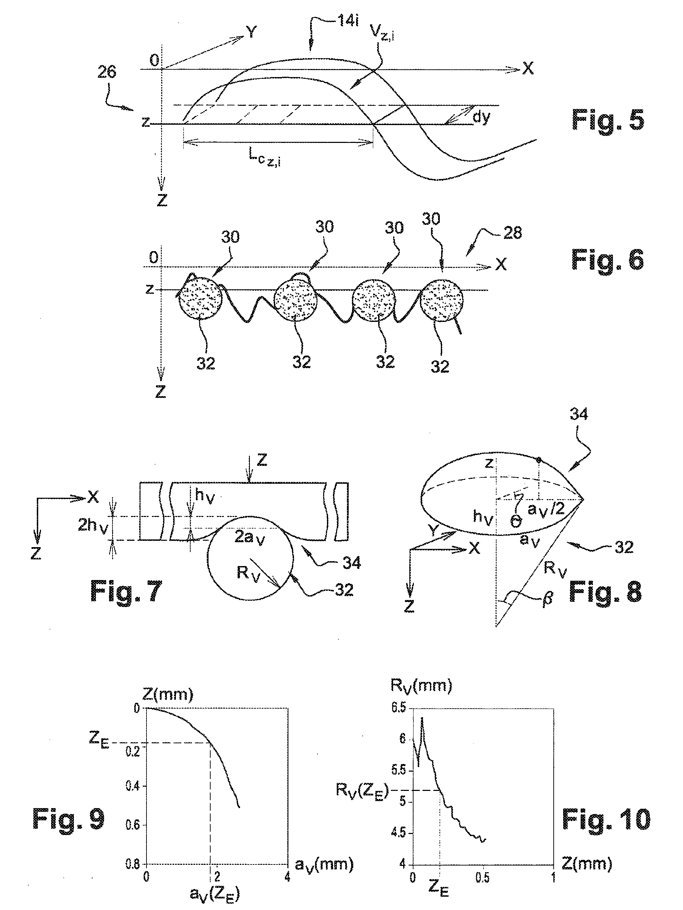

En référence à la figure 5, $V_R$ représente un volume indenté réel par unité de surface par les indenteurs réels 14 dans le pneumatique. Pour chaque cote z, on calcule chaque volume, $\Delta V_{z,i}$, indenté par chaque indenteur 14i à la cote z et défini par $\Delta V_{z,i} = L_{Cz,i} \cdot h_{m,i} \cdot dy$ où $Lc_{z,i}$ est une longueur de corde de chaque indenteur i à la cote z, $h_{m,i}$ est une hauteur moyenne de chaque indenteur 14i sur la longueur $L_{Cz,i}$. Puis, pour chaque cote z, on calcule $V_R(z)$ en additionnant les volumes $\Delta V_{z,i}(Z)$. On détermine ainsi une loi de variation $V_R(z)$ en fonction du paramètre variable z définie par :

$$V_{R(Z)} = \frac{1}{L.dy} . \Sigma \Delta V_{z,i}$$ où L représente la longueur du profil 24.

On modélise le revêtement 12 par un profil virtuel 28 représenté à la figure 6. Le profil virtuel 28 comporte des indenteurs virtuels 30 de modélisation des indenteurs réels 14. On définit des descripteurs, dits virtuels, des indenteurs virtuels 30. Chaque descripteur virtuel varie en fonction du paramètre variable z selon une loi de variation.
Ces descripteurs virtuels comprennent des descripteurs virtuels primaires $a_v$, $R_v$, $h_v$ et des descripteurs virtuels secondaires $\gamma_V$, $V_V$. L'indice V indique que les descripteurs sont virtuels. Les descripteurs virtuels secondaires $\gamma_V$, $V_V$ et les descripteurs réels $\gamma_R$, $V_R$ décrivent des grandeurs physiques analogues de l'interaction entre le pneumatique et respectivement les indenteurs virtuels 30 et réels 14. On définit pour le profil virtuel 28, de façon analogue au profil réel 24, un plan de coupe de cote z correspondant à un plan horizontal perpendiculaire à l'axe Z et s'étendant à la cote z.
Les indenteurs virtuels 30 sont représentés par des sphères 32. En variante, les indenteurs virtuels 30 pourront être représentés par des cônes, des barreaux cylindriques ou d'autres formes adaptées au type de revêtement à modéliser et à l'effet physique d'interaction.
On a représenté sur la figure 7 une interaction entre le pneumatique et une sphère virtuelle 32 de rayon $R_v$. Pour une charge Z appliquée sur le pneumatique, la sphère 32 crée une indentation de profondeur $2h_v$ et comprend une partie 34 lenticulaire au contact avec le pneumatique de rayon maximal $a_v$ et de hauteur $h_v$. L'interaction entre le pneumatique et la sphère 32 répond à une loi d'interaction de Hertz :

$$a_v = \frac{3(1-\nu^2)Z.R_v}{4.E}$$

dans laquelle v et E sont respectivement le coefficient de Poisson et le module de rigidité de la gomme du pneumatique.
On a représenté sur la figure 8 la partie lenticulaire 34 d'une sphère 32 de rayon $R_v$. Pour chaque descripteur virtuel secondaire $\gamma_v$, $V_v$, on va maintenant calculer chaque loi de variation en fonction d'au moins un des descripteurs virtuels primaires $a_v$, $R_v$, $h_v$, ici en fonction de $a_v$ et $R_v$.
$\gamma_v$ représente une déformation virtuelle du pneumatique par chaque indenteur virtuel 30, ici par la partie hémisphérique 34. La déformation réelle est calculée à partir du profil 16 des indenteurs réels 14 en deux dimensions. La déformation virtuelle est calculée à partir des sphères 32 en trois dimensions. On considère donc que la déformation virtuelle correspond à une moyenne des déformations engendrées par chaque sphère 32 selon l'ensemble des plans X, Z passant par chaque sphère 32 comme si les sphères 32 étaient disposées au hasard le long du profil virtuel 28. Ainsi, à partir d'un profil réel en deux dimensions, le procédé permet de déterminer des descripteurs tridimensionnels du profil virtuel.
La déformation moyenne correspond, dans chaque plan de coupe X, Z, à la déformation imposée par le point à mi-contact, c'est-à-dire le point de coordonnées x=($a_v$.cos $\theta$)/2, y=($a_v$. sin $\theta$)/2. Une pente au point de mi-contact est donnée par la relation :

$$\frac{dz}{dx} = -\frac{a_v}{2} . \cos\theta \left[ R_v^2 - \frac{a_v^2}{4} .(1-3.\sin^2\theta) \right]^{-\frac{1}{2}}$$

Afin d'obtenir la déformation virtuelle du pneumatique $\gamma_v$ sur l'ensemble des plans de coupe X,Z, on calcule :

$$\gamma_{m,v} = \frac{2}{\pi} \int_0^{\pi/2} -\frac{a_v}{2} . \cos\theta \left[ R_v^2 - \frac{a_v^2}{4} .(1-3.\sin^2\theta) \right]^{-\frac{1}{2}} d\theta$$

On détermine ainsi une loi de variation $\gamma_v$ (z) en fonction de $a_v$(z) et $R_v$(z) et donc en fonction de z :

$$\gamma_{m,v}(z) = \frac{a_v}{\pi\left(R_v^{\,2} - \frac{a_v^{\,2}}{4}\right)^{\frac{1}{2}}} + \frac{1}{8\pi}\left[\frac{a_v}{\left(R_v^{\,2} - \frac{a_v^{\,2}}{4}\right)^{\frac{1}{2}}}\right]^3$$

$V_v$ représente un volume indenté virtuel par les indenteurs virtuels 30 dans le pneumatique, ici par la partie hémisphérique 34.

On détermine ainsi une loi de variation $V_V(z)$ en fonction de $a_v(z)$ et $R_v(z)$, et donc en fonction de z, de la façon suivante :

$$V_V(z) = \pi.R_v^{\,3}.\left(\frac{2}{3} + \frac{\cos^3\beta}{3} - \cos\beta\right) \text{ avec } \cos\beta = \frac{R_v - h_v}{a_v}$$

Puis, on détermine, pour chaque valeur du paramètre variable z, une valeur de chaque descripteur virtuel primaire $a_v(z)$, $R_V(z)$ à partir de chaque loi de variation de chaque descripteur réel $Y_R(z)$, $V_R(z)$ et de chaque loi de variation de chaque descripteur virtuel secondaire $Y_v(z)$, $V_v(z)$. En l'espèce, pour chaque valeur du paramètre variable z, on pose l'égalité entre, d'une part, le volume indenté réel $V_R(z)$ et le volume indenté virtuel $V_v(z)$ et, d'autre part, la déformation réelle $Y_R(z)$ et la déformation virtuelle $Y_v(z)$. On détermine ainsi une loi de variation de chaque descripteur virtuel primaire $a_v(z)$, $R_v(z)$ en fonction du paramètre variable z. On parle alors de modèle à déformation et volume imposés.

On notera que les sphères 32 virtuelles sont, pour chaque valeur du paramètre variable z, identiques et toutes décrites par les mêmes descripteurs primaires $a_v(z)$, $R_v(z)$.

On a représenté sur les figures 9A et 9B les lois de variation des descripteurs virtuels primaires respectivement $a_v(z)$ et $R_v(z)$ à déformation et volume imposés.

On détermine alors une valeur, dite d'interaction, du paramètre variable, ici une valeur d'interaction $z_E$ de la cote z, à partir d'une part, de la loi d'interaction de Hertz, pécisée ci-dessus, entre le pneumatique et le revêtement et, d'autre part, de chaque loi de variation des descripteurs virtuels primaires $a_v(z)$, $R_v(z)$. On résout numériquement le système formé par ces trois lois et on obtient, dans l'exemple représenté, $z_E$=0.19 mm. On détermine aussi pour chaque loi de variation, une valeur d'interaction de chaque descripteur $a_v(z)$, $R_v(z)$ à la valeur $z_E$ d'interaction. On obtient $a_v(z_E)$=1,85 mm et $R_v(z_E)$=5,14 mm.

Puis, on prévoit un effet physique d'interaction entre le pneumatique et le revêtement. En l'espèce, on prévoit le bruit B de roulement du pneumatique sur le revêtement 12 à partir d'une loi de prévision du bruit B du type $B = g(V_1,...,V_n)$ dans laquelle $V_1,...,V_n$ sont des valeurs de descripteurs $D_1,..., D_n$ du revêtement.

Dans le premier mode de réalisation, n=2, $D_1$ est un nombre d'indenteurs caractéristique du revêtement 12 et $D_2$ est une dimension d'indenteurs caractéristique du revêtement 12. Dans l'exemple illustré, le nombre d'indenteurs caractéristique est la valeur d'interaction $N_{R,E}$ du nombre d'indenteurs réels 12 par unité de surface du revêtement 12 et la dimension d'indenteurs caractéristique est la valeur d'interaction $R_v(z_E)$ du rayon des sphères virtuelles 32.

Dans ce mode de réalisation, on prévoit le bruit B à partir d'une loi de prévision du bruit B de roulement définie par :

$$B = 20\log\left[\left(\frac{R_v(z_E)}{Ro}\right)^{\frac{1}{5}}\left(\frac{No}{N_{R,E}}\right)^{\frac{3}{5}}\left(\frac{C}{Co}\right)^k\left(\frac{0.75}{1-v^2}\frac{E}{Eo}\right)^{\frac{1}{5}}\right] + Bo \quad \text{(équation 1)}$$

dans laquelle C est la vitesse de roulement du pneumatique, v est le coefficient de Poisson de la gomme et E le module de rigidité de la gomme, Bo est un bruit de roulement de référence pour un pneumatique de référence de module de rigidité Eo roulant à la vitesse de référence Co sur un revêtement de référence de descripteurs virtuels de référence Ro et No. k appartient à l'intervalle [1,2-2]. De préférence, k=1,6. En variante, k=1,2. Dans une autre variante, k=2. Bo dépend de l'emplacement où est réalisé la mesure : à l'intérieur du véhicule portant le pneumatique, au bord d'une piste revêtue du revêtement...

Dans un second mode de réalisation, n, $D_1$ et $D_2$ sont identiques au premier mode de réalisation. On prévoit le bruit B à partir d'une loi de prévision du bruit B de roulement définie par :

$$B = 20\log\left[\left(\frac{R_v(z_E)}{Ro}\right)^{\frac{1}{5}}\left(\frac{No}{N_{R,E}}\right)^{\frac{3}{5}}\left(\frac{C}{Co}\right)^{k}\right] + Bo' \qquad \text{(équation 2)}$$

Lorsque l'on utilise un pneumatique de référence pour comparer plusieurs revêtements différents, les module de rigidité E et coefficient de Poisson v de la gomme sont connus et sont compris dans la constante de référence Bo'. k appartient à l'intervalle [1,2-2]. De préférence, k=1,6. En variante, k=1,2. Dans une autre variante, k=2.

Dans un troisième mode de réalisation, compte tenu de l'influence négligeable du descripteur $R_v$ par rapport aux autres descripteurs pour certains types de revêtements, on prévoit le bruit B de roulement d'un pneumatique donné à partir d'une loi de prévision du bruit B de roulement définie par :

$$B = 20\log\left[\left(\frac{No}{N_{R,E}}\right)^{\frac{3}{5}}\left(\frac{C}{Co}\right)^{k}\right] + Bo'' \qquad \text{(équation 3)}$$

Dans ce mode de réalisation n=1 et $D_1$, le nombre d'indenteurs caractéristique du revêtement, est le seul descripteur utilisé. k appartient à l'intervalle [1,2-2]. De préférence, k=1,6. En variante, k=1,2. Dans une autre variante, k=2. On observe généralement des écarts faibles entre les bruits B prévus par les équations 2 et 3.

Dans un quatrième mode de réalisation, on prévoit le bruit B de roulement d'un pneumatique quelconque à partir d'une loi de prévision du bruit B de roulement définie par :

$$B = 20\log\left[\left(\frac{No}{N_{R,E}}\right)^{\frac{3}{5}}\left(\frac{C}{Co}\right)^{k}\left(\frac{0.75}{1-v^2}\frac{E}{Eo}\right)^{\frac{1}{5}}\right] + Bo''' \qquad \text{(équation 4)}$$

Dans ce mode de réalisation n=1 et $D_1$, le nombre d'indenteurs caractéristique du revêtement, est le seul descripteur utilisé. k appartient à l'intervalle [1,2-2]. De préférence, k=1,6. En variante, k=1,2. Dans une autre variante, k=2.

Dans un cinquième mode de réalisation, on prévoit le bruit B de roulement d'une pneumatique donné à partir d'une loi de prévision du bruit de roulement B définie par:

$$B = 20\log\left[\left(\frac{R_v(z_E)}{Ro}\right)^{\frac{1}{5}}\left(\frac{No}{N_{R,E}}\right)^{\frac{3}{5}}\right] + Bo'''' \qquad \text{(équation 5)}$$

Cette relation permet d'obtenir une bonne prévision en ne tenant compte que des caractéristiques du revêtement. En effet, la loi tient compte de $R_v(z_E)$ qui, bien que présentant un poids mathématique plus faible que $N_{R,E}$, permet de décrire indirectement des caractéristiques du procédé de fabrication du revêtement telles que la nature de la roche, l'influence du mode de concassage. Cette relation permet également de comprendre comment une modification des caractéristiques du procédé de fabrication du revêtement modifie le bruit de roulement.

**Exemple de prévision du bruit B de roulement pour un pneumatique sculpté donné.**

On a effectué des essais avec un pneumatique sculpté sur différents revêtements T1-T4. Les descripteurs $N_{R,E}$ et $R_v(z_E)$ pour chacun de ces revêtements ont été déterminés selon le procédé selon l'invention. On acquiert le profil réel d'un échantillon de 1 m de chaque revêtement T1-T4 au moyen d'un profilomètre laser dont les résolutions spatiales sont dx = 0,1 mm selon l'axe X et dz = 0.01 mm selon l'axe Z. On utilise la loi de prévision du second mode de réalisation (équation 2) avec pour valeur Bo'=45 dB. Cette valeur de Bo' correspond à une moyenne expérimentale généralement mesurée pour un pneumatique de tourisme lorsqu'on se situe à l'extérieur du véhicule.

On fait rouler un véhicule donné à 60 km/h sur chaque revêtement T1-T4. On mesure alors le bruit à trois emplacements différents: à proximité du pneumatique, à l'intérieur du véhicule et à l'extérieur du véhicule au passage de ce dernier (appelé aussi *coast-by noise* en anglais). Les résultats sont donnés dans le tableau 1 ci-dessous.

Tableau 1

| Revêtement | $N_{R,E}$ (indenteurs/m$^2$) | $R_v(z_E)$ (mm) | B prévu par l'équation 2 (dB) | B mesuré à proximité du pneu (dB) | B mesuré à l'extérieur du véhicule (dB) | B mesuré à l'intérieur du véhicule (dB) |
|---|---|---|---|---|---|---|
| T1 | 4131 | 3,6 | 71,8 | 103,5 | 69,2 | 66,6 |
| T2 | 6911 | 4,8 | 69,6 | 103,5 | 66,6 | 63,7 |
| T3 | 19509 | 7,51 | 65,0 | 102 | 61,8 | 59,3 |
| T4 | 28233 | 3,74 | 61,9 | 95,7 | 55,4 | 56,3 |

Pour le bruit mesuré à proximité du pneu, on obtient la corrélation suivante $B_{mesuré} = 0{,}73.B_{prévu} + 52$ avec un coefficient de corrélation $R^2 = 0{,}8$.

Pour le bruit mesuré à l'extérieur du véhicule, on obtient la corrélation suivante $B_{mesuré} = 1{,}26.B_{prévu} - 21{,}40$ avec un coefficient de corrélation $R^2 = 0{,}96$.

Pour le bruit mesuré à l'intérieur du véhicule, on obtient la corrélation suivante $B_{mesuré} = 1{,}23.B_{prévu} - 22{,}10$ avec un coefficient de corrélation $R^2 = 0{,}97$.

On note que la valeur expérimentale $B_{mesuré}$ peut être approchée de façon plus précise en corrigeant la valeur de Bo' en fonction l'emplacement de mesure.

Quel que soit l'emplacement de mesure, la corrélation entre le modèle de prévision et les mesures effectuées est très satisfaisante et permet de comparer et prévoir, à partir d'échantillon d'un ou plusieurs revêtements, le bruit B issu du roulement d'un pneumatique donné.

**Exemple de prévision du bruit B de roulement pour un pneumatique lisse donné.**

Afin de caractériser la rugosité de la route sans interaction avec la sculpture du pneumatique, on utilise un pneumatique lisse. On effectue des essais sur différents revêtements R1-R6 illustrant la diversité des revêtements du réseau routier. Les descripteurs $N_{R,E}$ et $R_v(z_E)$ pour chacun de ces revêtements ont été déterminés selon le procédé selon l'invention. On acquiert le profil réel d'un échantillon de 1,7 m d'un revêtement donné au moyen d'un profilomètre laser dont les résolutions spatiales sont dx = 0.4 mm selon l'axe X et dz = 0,01 mm selon l'axe Z. On utilise les lois de prévision des deuxième et troisième modes de réalisation (équations 2 et 3) avec pour valeur Bo'= Bo"=45 dB.

On fait rouler un véhicule donné à 60 km/h sur chaque revêtement R1-R6. On réalise plusieurs mesures expérimentales du bruit à proximité du pneumatique et on fait une moyenne des mesures expérimentales pour chaque revêtement R1-R6. Les résultats sont donnés dans le tableau 2 ci-dessous.

Tableau 2

| Revêtements | $N_{R,E}$ (indenteurs/m$^2$) | $R_v(z_E)$ (mm) | B mesuré (dB) | B prévu selon l'équation 2 (dB) | B prévu selon l'équation 3 (dB) |
|---|---|---|---|---|---|
| R1 | 27128 | 6,1 | 84,9 | 82,9 | 83,8 |
| R2 | 18021 | 4,74 | 85,4 | 84,6 | 85,9 |
| R3 | 15028 | 4,66 | 86,9 | 85,6 | 86,9 |
| R4 | 19884 | 8,66 | 86,0 | 85,2 | 85,4 |
| R5 | 13922 | 5,77 | 87,1 | 86,3 | 87,3 |
| R6 | 5751 | 3,40 | 92,1 | 90,0 | 91,9 |

D'une part, on note que la prévision du bruit B de roulement pour l'ensemble des revêtements R1-R6, est excellente ce qui confirme la pertinence des descripteurs choisis mais également la justesse de la loi de prévision du bruit B de roulement pour des revêtements très différents.

D'autre part, on note que la valeur du bruit B prévu au moyen de la loi selon le troisième mode de réalisation est supérieure à la valeur du bruit B prévu au moyen de la loi selon le deuxième mode de réalisation. Dans le cadre de cet exemple, la loi selon le troisième mode de réalisation permet d'obtenir des valeurs de bruit B prévues plus proches des valeurs expérimentales que la loi selon le deuxième mode de réalisation.

Enfin, on note que la précision du bruit B prévu est supérieure à celle de l'exemple précédent.

Tout ou partie du procédé selon l'invention pourra être mis en oeuvre par le biais d'instructions de code aptes à commander l'exécution des étapes du procédé lorsqu'il est exécuté sur un ordinateur. Les instructions pourront émaner de programmes d'ordinateur enregistrés sur un support d'enregistrement de données par exemple du type à disque dur ou à mémoire flash, CD ou DVD. On pourra prévoir de mettre un tel programme à disposition en vue de son téléchargement sur un réseau de télécommunication tel que le réseau Internet ou un réseau sans fil. Des mises à jour du programme pourront ainsi être envoyées par ce réseau aux ordinateurs connectés au réseau.

**Revendications**

1. Procédé de prévision d'un bruit (B) de roulement d'un pneumatique sur un revêtement (12), **caractérisé en ce que** :

    - on relève un profil réel (16) du revêtement (12),
    - on détermine au moins une valeur ($a_v(z_E)$, $R_v(z_E)$, $N_{R,E}$) d'au moins un descripteur ($a_v$, $R_v$, $N_R$) du revêtement (12) à partir du profil réel (16),
    - on utilise une loi de prévision du bruit B de roulement du pneumatique du type $B = g(V_1,...,V_n)$ dans laquelle $V_1,...,V_n$ sont des valeurs de descripteurs $D_1,...,D_n$ du revêtement (12), $1 \leq n \leq 2$ et
    - $D_1$ est un nombre ($N_R$) d'indenteurs caractéristique du revêtement, et
    - $D_2$ est une dimension ($R_v$) d'indenteurs caractéristique du revêtement.

2. Procédé selon la revendication 1, dans lequel la loi de prévision du bruit est du type :

$$B = 20\log\left[\left(\frac{R}{Ro}\right)^{\frac{1}{5}}\left(\frac{No}{N}\right)^{\frac{3}{5}}\left(\frac{C}{Co}\right)^k\left(\frac{0.75}{1-v^2}\frac{E}{Eo}\right)^{\frac{1}{5}}\right] + Bo$$

dans laquelle R est la valeur ($R_v(z_E)$) de la dimension d'indenteurs caractéristique, N est la valeur ($N_{R,E}$) du nombre d'indenteurs caractéristique, C est une vitesse de roulement du pneumatique, E est un module de rigidité de la gomme du pneumatique, v est un coefficient de Poisson de la gomme du pneumatique, k appartient à l'intervalle [1,2-2] et Ro, No, Co, Eo et Bo sont des valeurs de référence.

3. Procédé selon la revendication 1, dans lequel la loi de prévision du bruit est du type :

$$B = 20\log\left[\left(\frac{R}{Ro}\right)^{\frac{1}{5}}\left(\frac{No}{N}\right)^{\frac{3}{5}}\left(\frac{C}{Co}\right)^k\right] + Bo'$$

dans laquelle R est la valeur ($R_v(z_E)$) de la dimension d'indenteurs caractéristique, N est la valeur ($N_{R,E}$) du nombre d'indenteurs caractéristique, C est une vitesse de roulement du pneumatique, k appartient à l'intervalle [1,2-2] et Ro, No, Co, et Bo' sont des valeurs de référence.

4. Procédé selon la revendication 1, dans lequel la loi de prévision du bruit est du type :

$$B = 20\log\left[\left(\frac{No}{N}\right)^{\frac{3}{5}}\left(\frac{C}{Co}\right)^k\right] + Bo''$$

dans laquelle N est la valeur ($N_{R,E}$) du nombre d'indenteurs caractéristique, C est une vitesse de roulement du pneumatique, k appartient à l'intervalle [1,2-2] et No, Co, et Bo" sont des valeurs de référence.

**5.** Procédé selon la revendication 1, dans lequel la loi de prévision du bruit est du type :

$$B = 20 \log \left[ \left( \frac{No}{N} \right)^{\frac{3}{5}} \left( \frac{C}{Co} \right)^{k} \left( \frac{0.75}{1-v^2} \frac{E}{Eo} \right)^{\frac{1}{5}} \right] + Bo'''$$

dans laquelle N est la valeur ($N_{R,E}$) du nombre d'indenteurs caractéristique, C est une vitesse de roulement du pneumatique, E est un module de rigidité de la gomme du pneumatique, v est un coefficient de Poisson de la gomme du pneumatique, k appartient à l'intervalle [1,2-2] et No, Co, Eo et Bo''' sont des valeurs de référence.

**6.** Procédé selon la revendication 1, dans lequel la loi de prévision du bruit est du type :

$$B = 20 \log \left[ \left( \frac{R}{Ro} \right)^{\frac{1}{5}} \left( \frac{No}{N} \right)^{\frac{3}{5}} \right] + Bo''''$$

dans laquelle R est la valeur de la dimension d'indenteurs caractéristique, N est la valeur du nombre d'indenteurs caractéristique et Bo'''' est une valeur de référence.

**7.** Procédé selon l'une quelconque des revendications précédentes, dans lequel :

- on détermine au moins une loi ($a_v(z)$, $R_v(z)$, $N_R(z)$) de variation d'au moins un descripteur ($a_v$, $R_v$, $N_R$) du revêtement (12) à partir du profil réel (16), en fonction d'un paramètre variable (z) du profil réel (16),
- on détermine, pour chaque loi de variation, une valeur ($a_v(z_E)$, $R_v(z_E)$, $N_{R,E}$), dite d'interaction, de chaque descripteur ($a_v$, $R_v$, $N_R$), à une valeur ($z_{R,E}$, $z_E$), dite d'interaction, du paramètre, et
- on prévoit une valeur du bruit de roulement à partir d'une valeur d'interaction ($R_v(z_E)$, $N_{R,E}$) d'au moins un descripteur ($R_v$, $N_R$).

**8.** Procédé selon la revendication précédente, dans lequel, on découpe le profil réel (16) en plusieurs strates, chaque strate correspondant à une cote (z) du profil réel (16):

- on détermine une loi ($a_v(z)$, $R_v(z)$, $N_R(z)$) de variation de chaque descripteur ($a_v$, $R_v$, $N_R$) en fonction de la cote (z) du profil réel (16), et
- on détermine, pour chaque loi ($a_v(z)$, $R_v(z)$, $N_R(z)$) de variation, la valeur d'interaction ($a_v(z_E)$, $R_v(z_E)$, $N_{R,E}$) de chaque descripteur virtuel à la valeur ($z_E$) d'interaction de la cote (z).

**9.** Procédé selon l'une quelconque des revendications précédentes, dans lequel :

- le ou les descripteurs ($a_v$, $R_v$, $N_R$) comprennent au moins un descripteur ($N_R$), dit réel, d'indenteurs réels (24) du revêtement (12);
- on détermine la valeur d'interaction ($N_{R,E}$) de chaque descripteur réel ($N_R$) ;
- on prévoit la valeur du bruit de roulement à partir de la valeur d'interaction ($N_{R,E}$) d'au moins un descripteur réel ($N_R$).

**10.** Procédé selon la revendication précédente, dans lequel, le descripteur réel étant le nombre ($N_R$) d'indenteurs réels par unité de surface du revêtement, la valeur du nombre caractéristique d'indenteurs est la valeur d'interaction ($N_{R,E}$) du nombre ($N_R$) d'indenteurs réels par unité de surface du revêtement.

**11.** Procédé selon la revendication précédente, dans lequel la valeur d'interaction ($N_{R,E}$) est la valeur maximum de la loi ($N_R(z)$) de variation du nombre ($N_R$) d'indenteurs réels par unité de surface du revêtement.

**12.** Procédé selon l'une quelconque des revendications 9 à 11, dans lequel :

- le ou les descripteurs ($a_v$, $R_v$, $N_R$) comprennent au moins un descripteur ($a_v$, $R_v$), dit virtuel, d'indenteurs virtuels (24) de modélisation des indenteurs réels (14) ;

- on détermine la valeur d'interaction ($a_v(z_E)$, $R_v(z_E)$) de chaque descripteur virtuel ($a_v$, $R_v$) à partir d'une part, d'une loi d'interaction entre le pneumatique et le revêtement (12) et, d'autre part, de chaque loi ($a_v(z)$, $R_v(z)$) de variation des indenteurs virtuels (24), et

- on prévoit la valeur du bruit de roulement à partir de la valeur d'interaction ($R_v(z_E)$) d'au moins un descripteur virtuel ($R_v$).

13. Procédé selon la revendication précédente, dans lequel, les indenteurs virtuels (30) étant représentés par des sphères identiques (32) pour chaque valeur du paramètre variable (z), le descripteur virtuel est le rayon ($R_v$) des sphères (32) et la valeur de la dimension caractéristique est la valeur d'interaction $R_v(z_E)$ du rayon des sphères (32).

14. Programme d'ordinateur, **caractérisé en ce qu'**il comprend des instructions de code aptes à commander l'exécution des étapes du procédé selon l'une quelconque des revendications précédentes lorsqu'il est exécuté sur un ordinateur.

15. Support d'enregistrement de données comprenant, sous forme enregistrée, un programme selon la revendication 14.

16. Mise à disposition d'un programme selon la revendication 14 sur un réseau de télécommunication en vue de son téléchargement.

17. Procédé de fabrication d'un revêtement, **caractérisé en ce qu'**il comprend une étape de prévision selon un procédé selon l'une quelconque des revendications 1 à 13.


## Patentansprüche

1. Verfahren zum Vorhersagen eines Rollgeräusches (B) eines Luftreifens auf einem Belag (12), **dadurch gekennzeichnet, dass**:

    - ein wirkliches Profil (16) des Belags (12) gemessen wird,
    - wenigstens ein Wert ($a_v(z_E)$, $R_v(z_E)$, $N_{R,E}$) wenigstens eines Deskriptors ($a_v$, $R_v$, $N_R$) des Belags (12) anhand des wirklichen Profils (16) bestimmt wird,
    - ein Gesetz zum Vorhersagen des Rollgeräusches B des Luftreifens des Typs B = g(V1, ..., $V_n$) verwendet wird, worin $V_1$, ..., $V_n$ Werte von Deskriptoren $D_1$, ..., $D_n$ des Belags (12) sind, wobei $1 \leq n \leq 2$ ist, und
    - $D_1$ eine charakteristische Anzahl ($N_R$) von Vertiefungen des Belags ist und
    - $D_2$ eine charakteristische Abmessung ($R_v$) von Vertiefungen des Belags ist.

2. Verfahren nach Anspruch 1, wobei das Geräuschvorhersagegesetz vom folgenden Typ ist:

$$B = 20 \log \left[ \left( \frac{R}{Ro} \right)^{\frac{1}{5}} \left( \frac{No}{N} \right)^{\frac{3}{5}} \left( \frac{C}{Co} \right)^{k} \left( \frac{0.75}{1-v^2} \frac{E}{Eo} \right)^{\frac{1}{5}} \right] + Bo$$

worin R der Wert ($R_v(z_E)$) der charakteristischen Abmessung von Vertiefungen ist, N der Wert ($N_{R,E}$) der charakteristischen Anzahl von Vertiefungen ist, C eine Rollgeschwindigkeit des Luftreifens ist, E ein Elastizitätsmodul des Gummis des Luftreifens ist, v ein Poisson-Koeffizient des Gummis des Luftreifens ist, k in dem Intervall [1, 2-2] liegt und Ro, No, Co, Eo und Bo Referenzwerte sind.

3. Verfahren nach Anspruch 1, wobei das Geräuschvorhersagegesetz vom folgenden Typ ist:

$$B = 20 \log \left[ \left( \frac{R}{Ro} \right)^{\frac{1}{5}} \left( \frac{No}{N} \right)^{\frac{3}{5}} \left( \frac{C}{Co} \right)^{k} \right] + Bo'$$

worin R der Wert ($R_v(z_E)$) der charakteristischen Abmessung von Vertiefungen ist, N der Wert ($N_{R,E}$) der charakteristischen Anzahl von Vertiefungen ist, C eine Rollgeschwindigkeit des Luftreifens ist, k in dem Intervall [1, 2-2] liegt und Ro, No, Co, und Bo' Referenzwerte sind.

4. Verfahren nach Anspruch 1, wobei das Geräuschvorhersagegesetz vom folgenden Typ ist:

$$B = 20 \log\left[\left(\frac{No}{N}\right)^{\frac{3}{5}}\left(\frac{C}{Co}\right)^{k}\right] + Bo''$$

worin N der Wert ($N_{R,E}$) der charakteristischen Anzahl von Vertiefungen ist, C eine Rollgeschwindigkeit des Luftreifens ist, k in dem Intervall [1, 2-2] liegt und No, Co, und Bo'' Referenzwerte sind.

5. Verfahren nach Anspruch 1, wobei das Geräuschvorhersagegesetz vom folgenden Typ ist:

$$B = 20 \log\left[\left(\frac{No}{N}\right)^{\frac{3}{5}}\left(\frac{C}{Co}\right)^{k}\left(\frac{0.75}{1-v^2}\frac{E}{Eo}\right)^{\frac{1}{5}}\right] + Bo'''$$

worin N der Wert ($N_{R,E}$) der charakteristischen Anzahl von Vertiefungen ist, C eine Rollgeschwindigkeit des Luftreifens ist, E ein Elastizitätsmodul des Gummis des Luftreifens ist, v ein Poisson-Koeffizient des Gummis des Luftreifens ist, k in dem Intervall [1, 2-2] liegt und No, Co, Eo und Bo''' Referenzwerte sind.

6. Verfahren nach Anspruch 1, wobei das Geräuschvorhersagegesetz vom folgenden Typ ist:

$$B = 20 \log\left[\left(\frac{R}{Ro}\right)^{\frac{1}{5}}\left(\frac{No}{N}\right)^{\frac{3}{5}}\right] + Bo''''$$

worin R der Wert der charakteristischen Abmessung von Vertiefungen ist, N der Wert der charakteristischen Anzahl von Vertiefungen ist und Bo'''' ein Referenzwert ist.

7. Verfahren nach einem der vorhergehenden Ansprüche, wobei:

- wenigstens ein Gesetz ($a_v(z)$, $R_v(z)$, $N_R(z)$) der Veränderung wenigstens eines Deskriptors ($a_v$, $R_v$, $N_R$) des Belags (12) anhand des wirklichen Profils (16) als Funktion eines veränderlichen Parameters (z) des wirklichen Profils (16) bestimmt wird,
- für jedes Veränderungsgesetz ein Wert ($a_v(z_E)$, $R_v(z_E)$, $N_{R,E}$) der Wechselwirkung jedes Deskriptors ($a_v$, $R_v$, $N_R$) mit einem Wechselwirkungswert ($z_{R,E}$, $z_E$) des Parameters bestimmt wird und
- ein Wert des Rollgeräusches anhand eines Wechselwirkungswerts ($R_v(z_E)$, $N_{R,E}$) wenigstens eines Deskriptors ($R_v$, $N_R$) vorhergesagt wird.

8. Verfahren nach dem vorhergehenden Anspruch, wobei das wirkliche Profil (16) in mehrere Streifen zerschnitten wird, wobei jeder Streifen einer Signatur (z) des wirklichen Profils (16) entspricht;

- ein Gesetz ($a_v(z)$, $R_v(z)$, $N_R(z)$) der Veränderung jedes Deskriptors ($a_v$, $R_v$, $N_R$) als Funktion der Signatur (z) des wirklichen Profils (16) bestimmt wird und
- für jedes Gesetz ($a_v(z)$, $R_v(z)$, $N_R(z)$) der Veränderung der Wechselwirkungswert ($a_v(z_E)$, $R_v(z_E)$, $N_{R,E}$) jedes virtuellen Deskriptors mit dem Wechselwirkungswert ($z_E$) der Signatur (z) bestimmt wird.

9. Verfahren nach einem der vorhergehenden Ansprüche, wobei:

- der oder die Deskriptoren ($a_v$, $R_v$, $N_R$) wenigstens einen so genannten realen Deskriptor ($N_R$) realer Vertiefungen (24) des Belags (12) enthalten;
- der Wechselwirkungswert ($N_{R,E}$) jedes realen Deskriptors ($N_R$) bestimmt wird;
- der Wert des Rollgeräusches anhand des Wechselwirkungswertes ($N_{R,E}$) wenigstens eines realen Deskriptors ($N_R$) vorhergesagt wird.

**10.** Verfahren nach dem vorhergehenden Anspruch, wobei der reale Deskriptor die Anzahl ($N_R$) realer Vertiefungen pro Einheitsoberfläche des Belags ist und wobei der Wert der charakteristischen Anzahl von Vertiefungen der Wechselwirkungswert ($N_{R,E}$) der Anzahl ($N_R$) realer Vertiefungen pro Einheitsoberfläche des Belags ist.

**11.** Verfahren nach dem vorhergehenden Anspruch, wobei der Wechselwirkungswert ($N_{R,E}$) der maximale Wert des Veränderungsgesetzes ($N_R(z)$) der Anzahl ($N_R$) realer Vertiefungen pro Einheitsoberfläche des Belags ist.

**12.** Verfahren nach einem der Ansprüche 9 bis 11, wobei:

- der oder die Deskriptoren ($a_v$, $R_v$, $N_R$) wenigstens einen so genannten virtuellen Deskriptor ($a_v$, $R_v$) virtueller Vertiefungen (24) der Modellierung realer Vertiefungen (14) enthalten;
- der Wechselwirkungswert ($a_v(z_E)$, $R_v(z_E)$) jedes virtuellen Deskriptors ($a_v$, $R_v$) einerseits anhand eines Wechselwirkungsgesetzes zwischen dem Luftreifen und dem Belag (12) und andererseits jedes Veränderungsgesetzes ($a_v(z)$, $R_v(z)$) virtueller Vertiefungen (24) bestimmt wird und
- der Wert des Rollgeräusches anhand des Wechselwirkungswertes ($R_v(z_E)$) wenigstens eines virtuellen Deskriptors ($R_v$) vorhergesagt wird.

**13.** Verfahren nach dem vorhergehenden Anspruch, wobei die virtuellen Vertiefungen (30) durch identische Kugeln (32) für jeden Wert des variablen Parameters (z) repräsentiert werden, der virtuelle Deskriptor der Radius ($R_v$) der Kugeln (32) ist und der Wert der charakteristischen Abmessung der Wechselwirkungswert ($R_v(z_E)$) des Radius der Kugeln (32) ist.

**14.** Computerprogramm, **dadurch gekennzeichnet, dass** es Codebefehle enthält, die dafür ausgelegt sind, die Ausführung der Schritte des Verfahrens nach einem der vorhergehenden Ansprüche auszuführen, wenn es auf einem Computer ausgeführt wird.

**15.** Datenaufzeichnungsträger, der in aufgezeichneter Form ein Programm nach Anspruch 14 enthält.

**16.** Bereitstellung eines Programms nach Anspruch 14 in einem Telekommunikationsnetz, damit es heruntergeladen wird.

**17.** Verfahren zum Herstellen eines Belags, **dadurch gekennzeichnet, dass** es einen Schritt des Vorhersagens gemäß einem Verfahren nach einem der Ansprüche 1 bis 13 umfasst.

**Claims**

**1.** Method for predicting rolling noise (B) of a tyre on a pavement (12), **characterized in that**:

- a real profile (16) of the pavement (12) is charted,
- at least one value ($a_v(z_E)$, $R_v(z_E)$, $N_{R,E}$) of at least one descriptor ($a_v$, $R_v$, $N_R$) of the pavement (12) is determined on the basis of the real profile (16),
- use is made of a law for predicting the rolling noise B of the tyre of the type $B=g(V_1,...,V_n)$ in which $V_1,...,V_n$ are values of descriptors $D_1,...,D_n$ of the pavement (12), $1 \leq n \leq 2$ and
- $D_1$ is a characteristic number ($N_R$) of indenters of the pavement, and
- $D_2$ is a characteristic dimension ($R_v$) of indenters of the pavement.

**2.** Method according to Claim 1, in which the noise prediction law is of the type:

$$B = 20 \log \left[ \left( \frac{R}{Ro} \right)^{\frac{1}{5}} \left( \frac{No}{N} \right)^{\frac{3}{5}} \left( \frac{C}{Co} \right)^{k} \left( \frac{0.75}{1-v^2} \frac{E}{Eo} \right)^{\frac{1}{5}} \right] + Bo$$

in which R is the value ($R_v(z_E)$) of the characteristic dimension of indenters, N is the value ($N_{R,E}$) of the characteristic number of indenters, C is a rolling speed of the tyre, E is a stiffness modulus of the rubber of the tyre, v is a Poisson's ratio of the rubber of the tyre, k belongs to the interval [1.2-2] and Ro, No, Co, Eo and Bo are reference values.

3. Method according to Claim 1, in which the noise prediction law is of the type:

$$B = 20 \log \left[ \left( \frac{R}{Ro} \right)^{\frac{1}{5}} \left( \frac{No}{N} \right)^{\frac{3}{5}} \left( \frac{C}{Co} \right)^{k} \right] + Bo'$$

in which R is the value ($R_v(z_E)$) of the characteristic dimension of indenters, N is the value ($N_{R,E}$) of the characteristic number of indenters, C is a rolling speed of the tyre, k belongs to the interval [1.2-2] and Ro, No, Co, and Bo' are reference values.

4. Method according to Claim 1, in which the noise prediction law is of the type:

$$B = 20 \log \left[ \left( \frac{No}{N} \right)^{\frac{3}{5}} \left( \frac{C}{Co} \right)^{k} \right] + Bo''$$

in which N is the value ($N_{R,E}$) of the characteristic number of indenters, C is a rolling speed of the tyre, k belongs to the interval [1.2-2] and No, Co, and Bo" are reference values.

5. Method according to Claim 1, in which the noise prediction law is of the type:

$$B = 20 \log \left[ \left( \frac{No}{N} \right)^{\frac{3}{5}} \left( \frac{C}{Co} \right)^{k} \left( \frac{0.75}{1-v^2} \frac{E}{Eo} \right)^{\frac{1}{5}} \right] + Bo'''$$

in which N is the value ($N_{R,E}$) of the characteristic number of indenters, C is a rolling speed of the tyre, E is a stiffness modulus of the rubber of the tyre, v is a Poisson's ratio of the rubber of the tyre, k belongs to the interval [1.2-2] and No, Co, Eo and Bo''' are reference values.

6. Method according to Claim 1, in which the noise prediction law is of the type:

$$B = 20 \log \left[ \left( \frac{R}{Ro} \right)^{\frac{1}{5}} \left( \frac{No}{N} \right)^{\frac{3}{5}} \right] + Bo''''$$

in which R is the value of the characteristic dimension of indenters, N is the value of the characteristic number of indenters and Bo"" is a reference value.

7. Method according to any one of the preceding claims, in which:

   - at least one law ($a_v(z)$, $R_v(z)$, $N_R(z)$) of variation of at least one descriptor ($a_v$, $R_v$, $N_R$) of the pavement (12) is determined on the basis of the real profile (16), as a function of a variable parameter (z) of the real profile (16),
   - a so-called interaction value ($a_v(z_E)$, $R_v(z_E)$, $N_{R,E}$) of each descriptor ($a_v$, $R_v$, $N_R$), is determined at a so-called interaction value ($z_{R,E}$, $z_E$) of the parameter, for each law of variation, and
   - a value (B) of the rolling noise is predicted on the basis of an interaction value ($R_v(z_E)$, $N_{R,E}$) of at least one descriptor ($R_v$, $N_R$).

8. Method according to the preceding claim, in which the real profile (16) is sectioned into several strata, each stratum corresponding to an altitude (z) of the real profile (16):

   - a law ($a_v(z)$, $R_v(z)$, $N_R(z)$) of variation of each descriptor ($a_v$, $R_v$, $N_R$) is determined as a function of the altitude (z) of the real profile (16), and
   - the interaction value ($a_v(z_E)$, $R_v(z_E)$, $N_{R,E}$) of each virtual descriptor is determined at the interaction value ($z_E$) of the altitude (z), for each law ($a_v(z)$, $R_v(z)$, $N_R(z)$) of variation.

9. Method according to any one of the preceding claims, in which:

   - the descriptor or descriptors ($a_v$, $R_v$, $N_R$) comprise at least one so-called real descriptor ($N_R$) of real indenters (24) of the pavement (12);
   - the interaction value ($N_{R,E}$) of each real descriptor ($N_R$) is determined;
   - the value of the rolling noise is predicted on the basis of the interaction value ($N_{R,E}$) of at least one real descriptor ($N_R$).

10. Method according to the preceding claim, in which, the real descriptor being the number ($N_R$) of real indenters per unit area of the pavement, the value of the characteristic number of indenters is the interaction value ($N_{R,E}$) of the number ($N_R$) of real indenters per unit area of the pavement.

11. Method according to the preceding claim, in which the interaction value ($N_{R,E}$) is the maximum value of the law ($N_R(z)$) of variation of the number ($N_R$) of real indenters per unit area of the pavement.

12. Method according to any one of Claims 9 to 11, in which:

    - the descriptor or descriptors ($a_v$, $R_v$, $N_R$) comprise at least one so-called virtual descriptor ($a_v$, $R_v$) of virtual indenters (24) for modelling the real indenters (14);
    - the interaction value ($a_v(z_E)$, $R_v(z_E)$) of each virtual descriptor ($a_v$, $R_v$) is determined on the basis, on the one hand, of a law of interaction between the tyre and the pavement (12) and, on the other hand, of each law ($a_v(z)$, $R_v(z)$) of variation of the virtual indenters (24), and
    - the value of the rolling noise is predicted on the basis of the interaction value ($R_v(z_E)$) of at least one virtual descriptor ($R_v$).

13. Method according to the preceding claim, in which, the virtual indenters (30) being represented by identical spheres (32) for each value of the variable parameter (z), the virtual descriptor is the radius ($R_v$) of the spheres (32) and the value of the characteristic dimension is the interaction value $R_v(z_E)$ of the radius of the spheres (32).

14. Computer program, **characterized in that** it comprises code instructions able to control the execution of the steps of the method according to any one of the preceding claims when it is executed on a computer.

15. Medium for recording data comprising, in recorded form, a program according to Claim 14.

16. Making available of a program according to Claim 14 on a telecommunication network with a view to its downloading.

17. Method for manufacturing a pavement, **characterized in that** it comprises a prediction step according to a method according to any one of Claims 1 to 13.

**Fig. 1**

**Fig. 2**

**Fig. 3**

**Fig. 4**

Fig. 5

Fig. 6

Fig. 7

Fig. 8

Fig. 9

Fig. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2007230458 A